# EUROPÄISCHE PATENTSCHRIFT

(11) **EP 1 287 265 B1**
(45) Veröffentlichungstag und Bekanntmachung des Hinweises auf die Patenterteilung: **13.07.2005**
(21) Anmeldenummer: 02742744.2
(22) Anmeldetag: 14.05.2002
(51) Int. Cl.: F16C 11/06

(54) **KUGELGELENK**
BALL-AND-SOCKET JOINT
ARTICULATION A ROTULE

(30) Priorität: 17.05.2001 DE 10124295
(43) Veröffentlichungstag der Anmeldung: 05.03.2003
(73) Patentinhaber: ZF Lemförder Metallwaren AG, 49441 Lemförde (DE)
(72) Erfinder: ABELS, Olaf, 49191 Belm (DE)
(86) Internationale Anmeldenummer: PCT/DE2002/001734
(87) Internationale Veröffentlichungsnummer: WO 2002/093028

(56) Entgegenhaltungen:
- EP-A- 0 280 018
- WO-A-00/55514
- WO-A-01/29437
- PATENT ABSTRACTS OF JAPAN vol. 010, no. 010 (M-446), 16. Januar 1986 (1986-01-16) & JP 60 172778 A (TOYODA GOSEI KK), 6. September 1985 (1985-09-06)

## Beschreibung

Die Erfindung betrifft ein Kugelgelenk, vorzugsweise für Fahrwerksaufhängungen und Lenkungen von Kraftfahrzeugen, mit einem Gelenkgehäuse, einem aus einer Kugelfläche und einem Zapfenteil bestehenden Lagerzapfen, welcher mit der Kugelfläche dreh- und auslenkbar im Gelenkgehäuse gelagert und mit dem Zapfenteil an einer fahrwerkseitigen Aufnahme festgelegt ist, und mit einem elastischen Dichtungsbalg, der am Gelenkgehäuse statisch und am Zapfenteil mittels mindestens eines Dichtungssitzes festgelegt ist.

Kugelgelenke der geschilderten gattungsgemäßen Art sind in unterschiedlichster Ausgestaltung aus dem Stand der Technik bekannt. Da bei derartigen Kugelgelenken eine Relativbewegung zwischen Gehäuse und Lagerzapfen stattfindet, muss die Abdichtung der innerhalb des Gehäuses gebildeten Lagerpaarung aus Kugelfläche des Lagerzapfens und einer korrespondierenden Lagerpfanne dynamisch sein. Bei bekannten Lösungen sitzt der Dichtungsbalg aus diesem Grunde mit einer an seinem Ende ausgebildeten Wulstverdickung, die einen inneren Dichtungssitz bildet, unmittelbar auf der Mantelfläche des Zapfenteils des Lagerzapfens und wird dort gegebenenfalls durch eigene Materialspannung oder durch die Spannung eines außen aufgesetzten Federringes gehalten. Generelle Problematik einer derartigen Ausgestaltung stellt die Korrosionsneigung an der Zapfenoberfläche dar, da der Zapfen üblicherweise aus Metall hergestellt ist und trotz eventuell vorhandener Beschichtung zur Korrosionshemmung nach einer gewissen Laufzeit zu Oberflächenveränderungen des Dichtungssitzes neigt, was letztendlich zu einem Ausfall des Dichtungssystems und nachfolgend des gesamten Kugelgelenkes durch Eindringen von Verschmutzungen in Folge des defekten Dichtungssitzes führt.

Aufgabe der vorliegenden Erfindung ist es daher, im Bereich des Dichtungssitzes zwischen Zapfenteil und Dichtungsbalg des Kugelgelenkes eine verbesserte Lebensdauer des Dichtungssitzes herbeizuführen und somit die Gesamtlebensdauer des betreffenden Kugelgelenkes zu verlängern.

Diese Aufgabe wird in Verbindung mit den gattungsbildenden Merkmalen durch die im kennzeichnenden Teil des Anspruches 1 offenbarte technische Lehre gelöst.

Gemäß dieser Lehre weist der Dichtungssitz zwischen Dichtungsbalg und Zapfenteil unmittelbar am Zapfenteil einen unter Vorspannung anliegenden elastischen Dichtring und eine zwischen dem Dichtungsbalg und dem Dichtring angeordnete Ringhülse auf Durch diese erfindungsgemäße Gestaltung wird der schleifende Dichtsitz zwischen Dichtungsbalg und benachbartem Zapfenteil des Lagerzapfens von der unmittelbaren Oberfläche des Zapfenteils weg in die Trennfuge zwischen Dichtring und benachbarter Ringhülse verlagert.

Bei den direkt zwischen dem Zapfenteil und dem Dichtring als auch bei der zwischen Ringhülse und Dichtungsbalg liegenden zusätzlichen Trennfugen handelt es sich um sogenannte statische Trennfugen, bei denen zwischen den benachbarten Bauteilen keine Relativbewegungen stattfinden, so dass hier die geschilderten Korrosionsproblematiken im weitesten Sinne ausgeschlossen sind. Die Verlagerung der kritischen Trennfuge in den Bereich zwischen Dichtring und Ringhülse erlaubt es, eine Vielzahl unterschiedlicher Werkstoffpaarungen wählen zu können, die sich in ihrer Kombination optimal auf die Verhinderung von Korrosionsschäden und die Verbesserung der tribologischen Eigenschaften abstimmen lassen. Darüber hinaus ergibt sich der Vorteil, dass durch die stärkere Abtrennung der Dichtungsfuge vom Balginnenraum und der Umgebung eine langlebige Schmierung der Trennfuge durch geeignete Fette leichter möglich ist.

Spezielle weitere Ausgestaltungen des Gegenstandes der Erfindung ergeben sich zusätzlich aus den Merkmalen der Unteransprüche. Bezüglich der Materialwahl hat es sich als besonders vorteilhaft erwiesen, den Dichtring aus Kautschukmaterial oder Kunststoffmaterial, vorzugsweise PUR oder PTFE herzustellen. Der Querschnitt des unmontierten Dichtungsringes kann kreisförmig oder oval gestaltet werden, wobei insbesondere der Kreisquerschnitt auf Grund am Markt vorhandener Normbauteile in bezug auf die Herstellkosten günstig zu bewerten ist. Dem verwendeten Kautschuk- oder Kunststoffmaterial können hierbei Zusätze beigefügt werden, die die Gleitfähigkeit positiv beeinflussen.

Der Dichtring wird üblicherweise bei der Montage des Kugelgelenkes durch elastische Aufweitung auf den Zapfen aufgeschoben, wobei die durch die Materialwahl und die Abmessungen vorgegebene Vorspannung nach dem Aufschieben einen statisch festen Sitz des Dichtringes auf dem Zapfenteil gewährleistet. Darüber hinaus ist jedoch denkbar, den Dichtring in einem speziellen Arbeitsgang an das Zapfenteil anzuvulkanisieren und somit eine feste Verbindung zwischen Lagerzapfen und Dichtring herzustellen.

Für die Gestaltung der Ringhülse hat es sich als vorteilhaft erwiesen, diese als Edelstahlhülse oder aus Kunststoff herzustellen. Zur Verbesserung des Korrosionsschutzes und der tribologischen Eigenschaften kann darüber hinaus die dem Dichtring zugewandte Oberfläche der Ringhülse einen Korrosionsschutzüberzug und/oder eine Gleitbeschichtung aufweisen.

Der Dichtungssitz besteht im wesentlichen aus dem Dichtring mit statischer Anlage am Zapfenteil und der Ringhülse, die wiederum zum Dichtungsbalg statisch festliegend gestaltet ist, also beispielsweise auch mit dem Dichtungsbalg fest verbunden ist. Demgemäß ist es auch denkbar, Ringhülse und Dichtungsbalg einstückig auszuführen, um ähnlich der festen Verbindung zwischen Zapfenteil und Dichtring die qualitativen Eigenschaften der zwischen dem benachbarten Bauteil bestehenden Trennfuge zu verbessern.

Es hat sich darüber hinaus als vorteilhaft erwiesen, insbesondere bei größeren Dichtringquerschnitten und hier insbesondere bei Rechteckquerschnitten, zusätzliche Versteifungen aus nichtelastischem Material vorzugsweise Metall einzubringen.

Im Folgenden werden verschiedene Ausgestaltungsbeispiele des Erfindungsgegenstandes anhand der beigefügten Zeichnungen näher erläutert. Es zeigt:
- Figur 1: eine Teilschnittdarstellung im Bereich des Faltenbalges eines erfindungsgemäßen Kugelgelenkes und
- Figur 2a - 2d: verschiedene Ausgestaltungen entsprechend der Detailansicht X aus Figur 1.

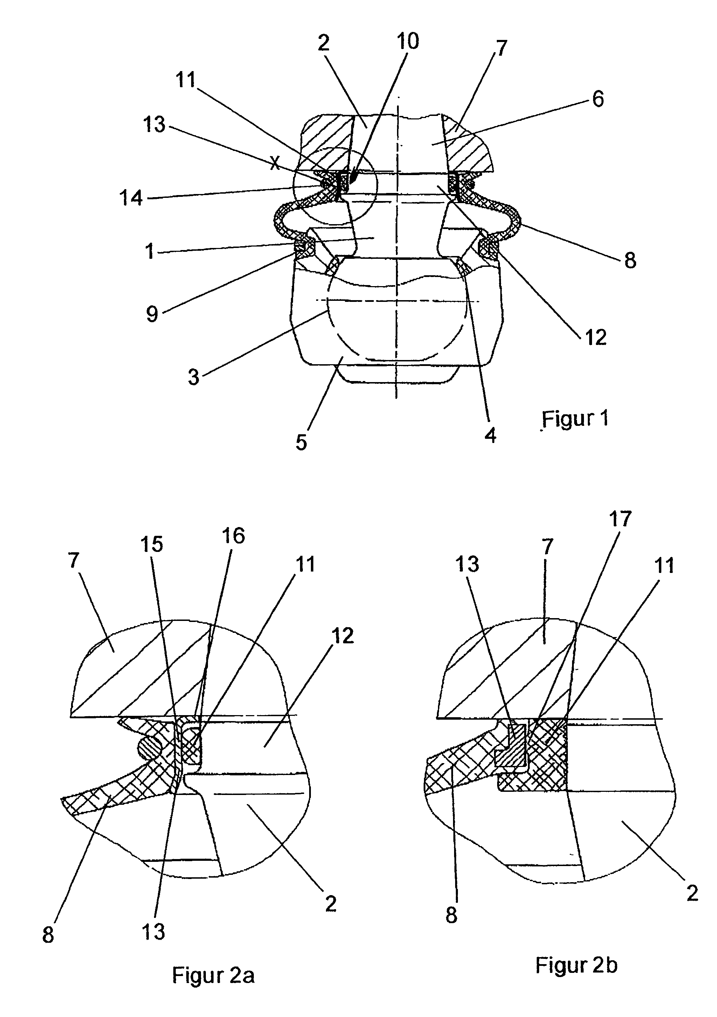

Bei dem in der Figur 1 dargestellten erfindungsgemäßen Kugelgelenk ist ein Gelenkzapfen 1, welcher aus einem Zapfenteil 2 und einer daran einstückig angeformten Kugelfläche 3 besteht, mittels einer Gelenkschale 4 aus einem begrenzt elastischen Werkstoff im Gelenkgehäuse 5 des Kugelgelenkes gelagert. Das Zapfenteil 2 des Gelenkzapfens 1 weist einen konisch ausgebildeten Bereich 6 auf, welcher zur Befestigung des Gelenkzapfens 1 innerhalb eines Fahrzeugteiles 7 dient.

Zur Abdichtung zwischen dem Gelenkgehäuse 5 und dem Gelenkzapfen 1 dient ein elastischer Dichtungsbalg 8, dessen eines Ende mittels eines Federringes 9 in einer umlaufenden Nut am Umfang des Gelenkgehäuses 5 statisch befestigt ist. Das andere Ende des Dichtungsbalges 8 ist mittels eines Dichtungssitzes 10, welcher zum dichten Anschluss des Dichtungsbalges 8 an das Zapfenteil 2 dient, versehen.

Dieser Dichtungssitz ist gegenüber herkömmlichen Ausführungen mehrteilig gestaltet und weist unmittelbar angrenzend an das Zapfenteil 2 einen an diesem unter Vorspannung anliegenden elastischen Dichtring 11 auf. Der Dichtring 11 wird bei der Montage des Kugelgelenkes aufgeweitet und über das freie Ende des Zapfenteiles 2 bis zum Absatz 12 aufgeschoben, wo er auf Grund seiner elastischen Eigenschaften nach Beendigung des Montagevorganges einen statisch festen Sitz einnimmt. Am Außenumfang des Dichtringes 11 ist zwischen diesem und dem Dichtungsbalg 8 eine Ringhülse 13 angeordnet. Dichtungsbalg 8 und Ringhülse 13 sind bei den in den Figuren 1 und 2a gezeigten Ausführungen mittels eines Federringes 14 fest miteinander verbunden. Eine Relativbewegung innerhalb des Dichtungssitzes 10, die sich auf Grund einer Drehung oder Verschwenkung des Gelenkzapfens 1 mit seiner Kugelfläche 3 innerhalb der Gelenkschale 4 ergibt, findet somit in der Trennfuge zwischen dem Dichtring 11 und der benachbarten Innenfläche der Ringhülse 13 statt.

Da eine Relativbewegung zwischen gegeneinander abdichtenden Bauteilen unter ungünstigen Rahmenbedingungen schnell zu korrosionsbedingten Ausfällen der Dichtungswirkung führen kann, ist durch die Verlagerung der kritischen Trennfuge und die Möglichkeit, die für die Dichtwirkung verantwortlichen miteinander benachbarten Bauteile bezüglich ihrer Materialeigenschaften optimal auf ihr Einsatzgebiet abstimmen zu können, eine verbesserte Möglichkeit geschaffen, die Dichtwirkung des Dichtungssitzes zwischen Zapfenteil 2 und Dichtungsbalg 8 über einen langen Zeitraum zu gewährleisten. Durch die Materialwahl des Dichtungsringes 11 und der Ringhülse 13 lassen sich darüber hinaus die Gleiteigenschaften zwischen den sich zueinander bewegenden Bauteilen optimieren.

Als Materialien für den Dichtungsring 10 können beispielsweise Kautschukmaterialien größerer Shorehärte, alternativ Gummimaterialien wie NBR, HNBR oder EPDM eingesetzt werden, darüber hinaus sind auch Dichtungsringe aus Kunststoffmaterialien wie PUR oder modifiziertem PTFE denkbar. Die aufgeführten Materialien können selbstverständlich mit Zusätzen zur Verbesserung der Gleitfähigkeit versehen werden. Darüber hinaus lässt sich die Oberfläche des Dichtungsringes selbstverständlich mit geeigneten Beschichtungen versehen.

In der Figur 2a ist die Ausgestaltung des Dichtungssitzes 10 entsprechend dem Detail X aus Figur 1 noch einmal vergrößert dargestellt. Aus dieser Figur wird deutlich, dass der Querschnitt der Ringhülse 13 einen ersten parallel zur Zapfenteiloberfläche verlaufenden Teilbereich 15 und einen hierzu abgewinkelten zweiten Teilbereich 16 aufweist. Der Winkel zwischen den Teilbereichen beträgt im vorliegenden Darstellungsbeispiel ca. 90°.

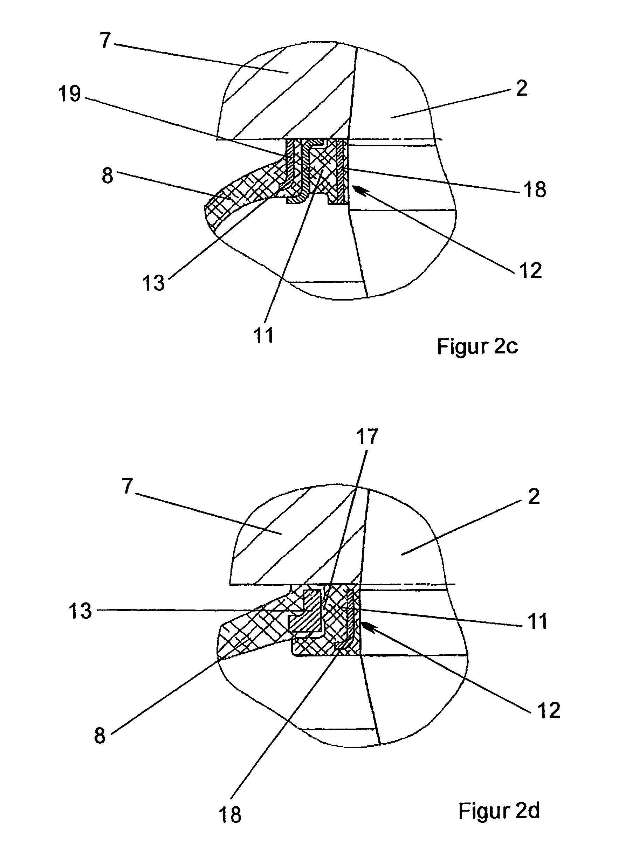

In den Figuren 2b, 2c und 2d sind Varianten des Dichtungssitzes 10 zwischen Zapfenteil 2 und Dichtungsbalg 8 dargestellt, die sich bezüglich des Querschnittaufbaus der verwendeten Bauteile von demjenigen Ausführungsbeipiel der Figur 1 bzw. 2a unterscheiden. Gemeinsam ist allen Ausführungsvarianten, dass der Dichtungssitz 10 aus dem Dichtring 11 mit statischer Anlage am Zapfenteil 2 und der Ringhülse 13, die wiederum zum Dichtungsbalg 8 statisch festliegend gestaltet ist, besteht.

So ist der Figur 2b zu entnehmen, dass der Dichtring 11 hier eine im wesentlichen rechteckförmige Gestalt aufweist, wobei eine am Außenumfang vorstehende Dichtungslippe 17 an der Innenseite der Ringhülse 13 zur Anlage kommt und die zwischen beiden Teilen bestehende Trennfuge für die notwendige Dichtwirkung verantwortlich ist. Der in Figur 2a erkennbare Federring 14 ist im Ausführungsbeispiel der Figur 2b entfallen, da Ringhülse 13 und der diese umgreifende Dichtungsbalg 8 durch einen Vulkanisierprozess einstückig miteinander verbunden sind.

Im Ausführungsbeispiel der Figur 2c ist der Dichtring 11 ebenfalls im wesentlichen rechteckförmig ausgeführt. Die Schnittdarstellung zeigt darüber hinaus, dass sich innerhalb des Dichtungsringes 11 ein umlaufendes Versteifungselement 18 befindet, welches beispielsweise aus einem umlaufenden Metallring bestehen kann. Die Ringhülse 13 weist in diesem Ausführungsbeispiel einen im wesentlichen S-förmigen Querschnitt auf. Darüber hinaus ist dieser Figur zu entnehmen, dass im Dichtungsbalg 8 ebenfalls ein Versteifungselement 19 integriert ist.

Das Ausführungsbeispiel der Figur 2d entspricht im wesentlichen demjenigen der Figur 2b. Allerdings ist der Schnittbilddarstellung zu entnehmen, dass hier analog der Figur 2c innerhalb des Dichtungsringes 11 ein Versteifungselement 18 angeordnet ist.

### Bezugszeichenliste

- 1.: Gelenkzapfen
- 2.: Zapfenteil
- 3.: Kugelfläche
- 4.: Gelenkschale
- 5.: Gelenkgehäuse
- 6.: Bereich
- 7.: Fahrzeugteil
- 8.: Dichtungsbalg
- 9.: Federring
- 10.: Dichtungssitz
- 11.: Dichtring
- 12.: Absatz
- 13.: Ringhülse
- 14.: Federring
- 15.: Teilbereich
- 16.: Teilbereich
- 17.: Dichtungslippe
- 18.: Versteifungselement
- 19.: Versteifungselement

## Patentansprüche

1. Kugelgelenk, vorzugsweise für Fahrwerksaufhängungen oder Lenkungen von Kraftfahrzeugen, mit einem Gelenkgehäuse (5), einem aus einer Kugelfläche (3) und einem Zapfenteil (2) bestehenden Lagerzapfen (1), welcher mit der Kugelfläche dreh- und auslenkbar im Gelenkgehäuse (5) gelagert und mit dem Zapfenteil (2) an einer fahrzeugseitigen Aufnahme (7) festgelegt ist, und mit einem elastischen Dichtungsbalg (8), der am Gelenkgehäuse (5) statisch und am Zapfenteil (2) mittels mindestens eines Dichtungssitzes (10) festgelegt ist,
**dadurch gekennzeichnet, dass**
der Dichtungssitz (10) zwischen Dichtungsbalg (8) und Zapfenteil (2) einen unmittelbar am Zapfenteil (2) unter Vorspannung anliegenden oder stoffchlüssig mit diesem verbundenen elastischen Dichtring (11) und eine zwischen dem Dichtungsbalg (8) und dem Dichtring (11) angeordnete, am Dichtungsbalg (8) statisch festgelegte Ringhülse (13) aufweist.

2. Kugelgelenk nach Anspruch 1,
**dadurch gekennzeichnet, dass** der Dichtring (11) im vormontierten Zustand einen Kreisquerschnitt aufweist.

3. Kugelgelenk nach Anspruch 1,
**dadurch gekennzeichnet, dass** der Dichtring (11) einen ovalen Querschnitt aufweist.

4. Kugelgelenk nach Anspruch 1,
**dadurch gekennzeichnet, dass** der Dichtring (8) einen rechteckförmigen Querschnitt aufweist.

5. Kugelgelenk nach Anspruch 1,
**dadurch gekennzeichnet, dass** der Dichtring aus Kautschukmaterial besteht.

6. Kugelgelenk nach Anspruch 1,
**dadurch gekennzeichnet, dass** der Dichtring (8) aus Kunststoffmaterial, vorzugsweise PUR oder PTFE besteht.

7. Kugelgelenk nach einem der Ansprüche 1 bis 6,
**dadurch gekennzeichnet, dass** im Querschnitt des Dichtringes (11) Versteifungselemente (18) aus nicht elastischem Material, vorzugsweise Metall angeordnet sind.

8. Kugelgelenk nach einem der Ansprüche 1 bis 7,
**dadurch gekennzeichnet, dass** der Querschnitt der Ringhülse (13) einen ersten parallel zur Oberfläche des Zapfenteiles (2) verlaufenden Teilbereich (15) und einen hierzu abgewinkelten zweiten Teilbereich (16) aufweist.

9. Kugelgelenk nach einem der Ansprüche 1 bis 8,
**dadurch gekennzeichnet, dass** die Ringhülse (13) aus Edelstahl besteht.

10. Kugelgelenk nach einem der Ansprüche 1 bis 8,
**dadurch gekennzeichnet, dass** die Ringhülse (13) aus Kunststoff besteht.

11. Kugelgelenk nach einem der Ansprüche 1 bis 10,
**dadurch gekennzeichnet, dass** die Ringhülse (13) mindestens an ihrer dem Dichtring (11) zugewandten Oberfläche einen Korrosionsschutzüberzug aufweist.

12. Kugelgelenk nach einem der Ansprüche 1 bis 11,
**dadurch gekennzeichnet, dass** die Ringhülse (13) mindestens an ihrer dem Dichtring (11) zugewandten Oberfläche eine Gleitbeschichtung aufweist.

13. Kugelgelenk nach einem der Ansprüche 1 bis 12,
**dadurch gekennzeichnet, dass** die Ringhülse (13) mit dem Dichtungsbalg (8) einstückig ausgeführt ist.

14. Kugelgelenk nach einem der Ansprüche 1 bis 12,
**dadurch gekennzeichnet, dass** die zwischen dem Dichtungsbalg (8) und dem Dichtring (11) angeordnete Ringhülse (13) mit dem Dichtungsbalg (8) fest verbunden ist.

## Claims

1. Ball joint, preferably for chassis suspensions or steering systems of motor vehicles, having a joint housing (5), a bearing pin (1) comprising a spherical surface (3) and a pin part (2) which is mounted so that the spherical surface is able to rotate and pivot outwards in the joint housing (5) and fixed to the pin part (2) on a vehicle-side mount (7), and having an elastic sealing bellows (8) which is statically fixed to the joint housing (5) and to the pin part (2) by means of at least one seal seat (10),
**characterised in that**
the seal seat (10) between the sealing bellows (8) and pin part (2) has an elastic sealing ring (11) directly abutting with the pin part (2) in a pretensioned arrangement or integrally joined to the material thereof and an annular sleeve (13) statically secured to the sealing bellows (8) between the sealing bellows (8) and the sealing ring (11).

2. Ball joint as claimed in claim 1,
**characterised in that** the sealing ring (11) has a circular cross-section in the state prior to assembly.

3. Ball joint as claimed in claim 1,
**characterised in that** the sealing ring (11) has an oval cross-section.

4. Ball joint as claimed in claim 1,
**characterised in that** the sealing ring (8) has a rectangular cross-section.

5. Ball joint as claimed in claim 1,
**characterised in that** the sealing ring is made from rubber material.

6. Ball joint as claimed in claim 1,
**characterised in that** the sealing ring (8) is made from plastic material, preferably PUR or PTFE.

7. Ball joint as claimed in one of claims 1 to 6,
**characterised in that** stiffening elements (18) made from non-elastic material, preferably metal, are provided in the cross-section of the sealing ring (11).

8. Ball joint as claimed in one of claims 1 to 7,
**characterised in that** the cross-section of the annular sleeve (13) has a first part region (15) extending parallel with the surface of the pin part (2) and a second part region (16) disposed at an angle thereto.

9. Ball joint as claimed in one of claims 1 to 8.
**characterised in that** the annular sleeve (13) is made from stainless steel.

10. Ball joint as claimed in one of claims 1 to 8,
**characterised in that** the annular sleeve (13) is made from plastic.

11. Ball joint as claimed in one of claims 1 to 10,
**characterised in that** the annular sleeve (13) has an anti-corrosion coating at least on its surface directed towards the sealing ring (11).

12. Ball joint as claimed in one of claims 1 to 11,
**characterised in that** the annular sleeve (13) has an anti-friction coating at least on its surface directed towards the sealing ring (11).

13. Ball joint as claimed in one of claims 1 to 12,
**characterised in that** the annular sleeve (13) is made integrally with the sealing bellows (8).

14. Ball joint as claimed in one of claims 1 to 12,
**characterised in that** the annular sleeve (13) disposed between the sealing bellows (8) and the sealing ring (11) is fixedly joined to the sealing bellows (8).

## Revendications

1. Articulation à rotule, de préférence pour des suspensions de train de roulement ou des directions de véhicules automobiles, avec un boîtier d'articulation (5), un tourillon de palier (1) formé d'une surface sphérique (3) et d'une partie formant tourillon (2), le tourillon de palier étant monté, par la surface sphérique, avec une possibilité de rotation et de débattement angulaire, dans le boîtier d'articulation (5), et étant fixé, par la partie formant tourillon (2), sur un logement (7) situé côté véhicule, et avec un soufflet d'étanchéité (8) élastique, fixé de façon statique au boîtier d'articulation (5) et sur la partie formant tourillon (2), à l'aide d'au moins un siège d'étanchéité (10),
**caractérisée en ce que**
le siège d'étanchéité (10) présente, entre le soufflet d'étanchéité (8) et la partie formant tourillon (2), une bague d'étanchéité (11) élastique, appliquée directement sur la partie formant tourillon (2) sous précontrainte, ou reliée à celle-ci par une liaison par la matière, et présente une douille annulaire (13) fixée de façon statique sur le soufflet d'étanchéité (8), disposée entre le soufflet d'étanchéité (8) et la bague d'étanchéité (11).

2. Articulation à rotule selon la revendication 1,
**caractérisée en ce que** la bague d'étanchéité (11) présente à l'état pré monté une section transversale circulaire.

3. Articulation à rotule selon la revendication 1,
**caractérisée en ce que** la bague d'étanchéité (11) présente une section transversale ovale.

4. Articulation à rotule selon la revendication 1,
**caractérisée en ce que** la bague d'étanchéité (8) présente une section transversale à forme rectangulaire.

5. Articulation à rotule selon la revendication 1,
**caractérisée en ce que** la bague d'étanchéité est formée d'un matériau à base de caoutchouc.

6. Articulation à rotule selon la revendication 1,
**caractérisée en ce que** la bague d'étanchéité (8) est formée d'un matériau synthétique, de préférence de PUR ou de PTFE.

7. Articulation à rotule selon l'une des revendications 1 à 6,
**caractérisée en ce que** des éléments de rigidification (18) en matériau non élastique, de préférence en métal, sont disposés dans la section transversale de la bague d'étanchéité (11).

8. Articulation à rotule selon l'une des revendications 1 à 7,
**caractérisée en ce que** la section transversale de la douille annulaire (13) présente une première zone partielle (15), s'étendant parallèlement à la surface de la partie formant tourillon (2), et une deuxième zone partielle (16), inclinée par rapport à celle-ci.

9. Articulation à rotule selon l'une des revendications 1 à 8,
**caractérisée en ce que** la douille annulaire (13) est réalisée en acier spécial.

10. Articulation à rotule selon l'une des revendications 1 à 8,
**caractérisée en ce que** la douille annulaire (13) est formée de matière synthétique.

11. Articulation à rotule selon l'une des revendications 1 à 10,
**caractérisée en ce que** la douille annulaire (13) présente, au moins sur sa surface tournée vers la bague d'étanchéité (11), un revêtement de protection contre la corrosion.

12. Articulation à rotule selon l'une des revendications 1 à 11,
**caractérisée en ce que** la douille annulaire (13) présente un revêtement favorisant le glissement au moins sur sa surface tournée vers la bague d'étanchéité (11).

13. Articulation à rotule selon l'une des revendications 1 à 12,
**caractérisée en ce que** la douille annulaire (13) est réalisée d'une seule pièce avec le soufflet d'étanchéité (8).

14. Articulation à rotule selon l'une des revendications 1 à 12,
**caractérisée en ce que** la douille annulaire (13), disposée entre le soufflet d'étanchéité (8) et la bague d'étanchéité (11), est reliée rigidement au soufflet d'étanchéité (8).
